Europäisches Patentamt

European Patent Office

Office européen des brevets

(11) Numéro de publication : **0 043 883**
**B1**

(19)

(12) # FASCICULE DE BREVET EUROPÉEN

(45) Date de publication du fascicule du brevet :
05.09.84

(21) Numéro de dépôt : **80401074.2**

(22) Date de dépôt : **18.07.80**

(51) Int. Cl.³ : **F 16 B 45/00, B 60 R 9/00**

(54) **Crochet de lien, notamment crochet de lien élastique.**

(30) Priorité : **15.07.80 FR 8015612**

(43) Date de publication de la demande :
**20.01.82 Bulletin 82/03**

(45) Mention de la délivrance du brevet :
**05.09.84 Bulletin 84/36**

(84) Etats contractants désignés :
**AT BE CH DE GB IT LI LU NL SE**

(56) Documents cités :
**DE-B- 1 147 430**
**DE-C- 939 910**
**FR-A- 2 059 879**

(73) Titulaire : **JOUBERT S.A.**
**B.P. 67 Champ De Clure**
**F-63600 Ambert (FR)**

(72) Inventeur : **Joubert, Jean**
**Champ de Clure**
**F-63600 Ambert (FR)**
Inventeur : **Joubert, Antoine**
**Champ de Clure**
**F-63600 Ambert (FR)**
Inventeur : **Joubert, Thierry**
**Champ de Clure**
**F-63600 Ambert (FR)**
Inventeur : **Bichard, Bernard**
**Villeneuve**
**F-63600 Ambert (FR)**

(74) Mandataire : **Schrimpf, Robert et al**
**Cabinet Regimbeau 26, Avenue Kléber**
**F-75116 Paris (FR)**

## Description

L'invention concerne un crochet pour l'accrochage d'un lien, notamment d'un lien élastique, tel qu'un câble ou une sangle élastique, en particulier pour l'accrochage d'un lien élastique du type « Sandow ».

Les crochets qui sont fixés à un câble ou une sangle, rigide ou élastique, par exemple les crochets équipant les filets de retenue de bagages ou les fixe-bagages monobrins ou multibrins, sont généralement constitués par un simple fil d'acier recourbé qui peut se décrocher de façon intempestive et qui peut blesser l'utilisateur.

Pour éviter de tels inconvénients, on a proposé, dans le brevet FR-A-2 059 879, un crochet qui présente une partie formant un bloc de fixation au lien et une partie formant une boucle d'accrochage ouverte dont une branche est solidaire du bloc de fixation et dont l'autre branche est libre, peut s'écarter ou se rapprocher latéralement du bloc et présente un moyen d'agrippage constitué par un bec dirigé vers le fond de la boucle et apte à pénétrer dans un évidement relié au bloc et fermant la boucle.

L'objet de l'invention est défini dans la revendication principale ; des modes particuliers de réalisation sont décrits dans les revendications dépendantes.

L'invention vise à améliorer l'agrippage du bec et de l'évidement d'un crochet du type précité de manière à fournir un crochet qui ne puisse pas se décrocher tout en restant facile à mettre en œuvre et à ôter, de préférence un crochet dont l'ouverture nécessite d'exercer un effort opposé à la traction du lien sur le crochet.

Selon la caractéristique essentielle du crochet de l'invention, le bec est pointu et l'évidement se trouve sur le bloc et présente en creux une forme correspondante pour l'auto-centrage du bec dans l'évidement.

Selon une autre caractéristique de l'invention, le bloc présente un passage de lien et ledit évidement du bloc est tourné en sens contraire du sens d'introduction du lien dans ledit passage.

D'autres caractéristiques et avantages de l'invention seront mieux compris à la lecture de la description qui va suivre et qui se réfère aux dessins annexés donnés uniquement à titre illustratif, et sur lesquels :

la figure 1 est une vue en perspective d'un crochet, conforme à un premier mode de réalisation de l'invention, représenté en position d'ouverture ;

la figure 2 est une vue en perspective montrant le crochet de la figure 1 en position d'ouverture à un stade précédant sa fermeture ;

la figure 3 est une vue en perspective montrant le crochet des figures 1 et 2 en position de fermeture ;

la figure 4 est une vue en coupe d'un crochet, conforme à un autre mode de réalisation de l'invention, représenté en position de fermeture ;

la figure 5 est une vue en perspective montrant le crochet de la figure 4 en position d'ouverture, et

la figure 6 est une autre vue en perspective du crochet des figures 4 et 5.

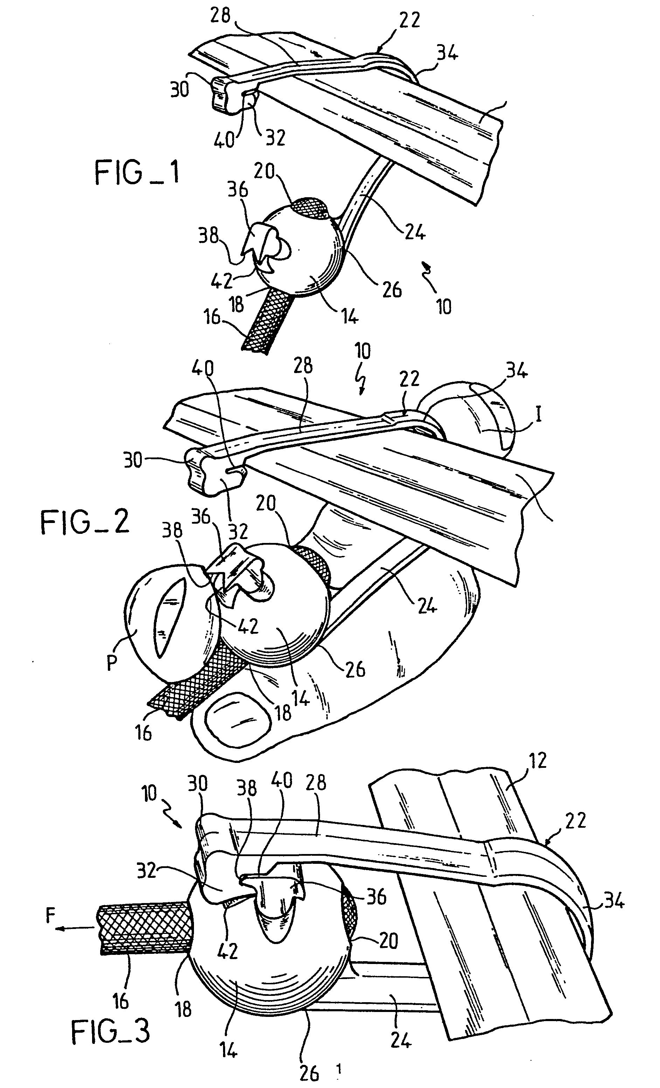

On a représenté sur les figures 1 à 3 un crochet 10 selon l'invention destiné à être fixé sur une barre 12 faisant partie, par exemple, d'une galerie de toit de véhicule automobile.

Le crochet 10 comporte un bloc de fixation 14 de forme quelconque, par exemple de forme généralement sphérique, pourvu d'un passage traversant dirigé suivant un diamètre de la sphère et destiné à la fixation d'un câble élastique 16. Ce passage traversant débouche sur l'extérieur par des ouvertures circulaires 18 et 20 opposées, l'ouverture 18 ayant un diamètre inférieur à l'ouverture 20 pour permettre à l'extrémité du câble 16 d'être repliée et fixée sur elle-même sans pouvoir s'échapper du bloc de fixation 14.

Le crochet 10 comporte également une partie formant boucle de retenue 22 ayant sensiblement la forme d'un U et comportant une branche 24 dont l'extrémité 26 est solidaire du bloc de fixation 14 et une branche 28 dont l'extrémité 30 est libre et pourvue d'un bec 32 retourné dirigé en direction du fond du U. Les branches 24 et 26 sont réunies entre elles par une partie arrondie, sensiblement circulaire 34, formant la boucle proprement dite.

Les branches de la boucle sont plates et épaisses et portent à plat contre le bloc de fixation 14, lequel se trouve situé entre les branches.

Le bec 32 peut être engagé ou dégagé dans un évidement 42 du bloc pour assurer respectivement la fermeture du crochet (figure 3) ou l'ouverture du crochet (figures 1 et 2).

L'évidement 42 est délimité du côté du bec par une paroi frontale 36 qui, en position de fermeture du crochet (figure 3), s'engage comme un cran dans un espace 40 compris entre le bec 32 et la branche 28 de la boucle.

L'évidement 42 a en creux une forme correspondante à celle du bec 32 en sorte que ces deux éléments puissent coopérer étroitement dans la position de fermeture telle que représentée sur la figure 3.

Dans le mode de réalisation des figures 1 à 3, le bec 32 a la forme d'une pointe, plus précisément d'un angle légèrement obtus, dirigée en direction du fond du U. Cette pointe est comprise dans un plan perpendiculaire au plan défini par les deux branches 24 et 28 de la boucle de retenue 22. Ceci assure l'auto-centrage du bec dans l'évidement.

On remarquera que le rebord 38 de la paroi 36 présente une coupe en V analogue à la forme de la pointe du bec 32.

L'organe d'accrochage 36 et le point de solidarisation de l'extrémité 26 de la branche 24 sur le corps de fixation 14 sont disposés symétriquement sur la sphère par rapport au passage traversant en sorte que, dans la position de fermeture du crochet (cf. figure 3), les deux branches 24 et 28 du U soient sensiblement parallèles au passage traversant et par suite à la direction du câble 16.

Le crochet représenté sur les figures 1 à 3 est avantageusement réalisé en une seule pièce par moulage d'une matière plastique. Les branches de la boucle sont rigides mais la boucle permet d'écarter la branche libre pour que le bec 32 puisse être engagé (ou dégagé) de l'organe d'accrochage 36.

Le dispositif s'utilise de la façon décrite ci-après.

Le crochet en position ouverture est engagé autour de l'élément 12 de galerie comme indiqué sur la figure 1. On rapproche ensuite manuellement le bloc de fixation 14 et la boucle de retenue 22 en plaçant par exemple le pouce (P) sur le corps de fixation 14 et l'index (I) sur le fond arrondi 34 de la boucle de retenue de manière à rapprocher le bec 32 de l'organe d'accrochage 36, comme représenté sur la figure 2.

Une fois que le bec 32 se trouve en vis-à-vis de l'organe d'accrochage 36, on relâche la tension exercée avec le pouce et l'index en sorte que le bec 32 pénètre à l'intérieur de l'évidement 42. On remarquera que la forme en pointe du bec 32 favorise son centrage à l'intérieur de l'évidement 42. Ceci empêche en outre un déverrouillage latéral du crochet 10 résultant d'un déplacement latéral du bec 32 par rapport à l'évidement 42. On remarquera sur la figure 3 que tout effort F exercé sur le crochet 10 par l'intermédiaire du câble 16 tend à favoriser la coopération du bec 32 et de l'organe d'accrochage 36 et que, pour désolidariser le bec 32 de cet organe d'accrochage 36, il faut exercer sur la boucle de retenue un effort dirigé en direction opposée de l'effort F.

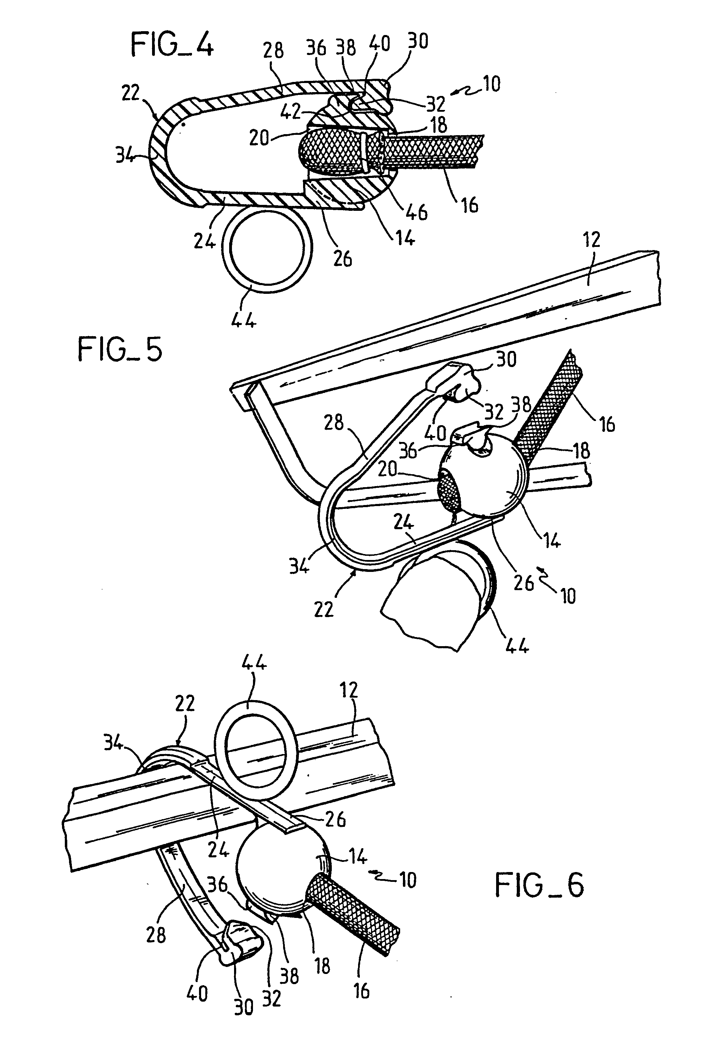

On a représenté sur les figures 4 à 6 un crochet qui diffère de celui des figures 1 à 3 uniquement par la présence d'un anneau de préhension 44 fixé sur la branche 24 qui est solidarisée sur le bloc de fixation 14. Le rôle de cet anneau est de faciliter la traction du câble 16 comme représenté par exemple sur la figure 5.

On remarquera sur la coupe de la figure 4 que l'extrémité du câble 16 est repliée sur elle-même et maintenue au moyen d'un cerclage métallique 46. Avec cette disposition, le câble ne peut s'échapper du bloc de fixation 14.

Ainsi, le bloc de fixation, dont la forme n'est pas limitative mais est choisie de préférence parmi les formes faciles à obtenir par moulage peut avoir, par exemple, la forme d'un tronc de cône ou d'un tronc de pyramide. Ce bloc peut comporter en outre divers évidements ou des plats latéraux.

L'homme de métier n'est pas limité à une fixation particulière du câble au bloc de fixation : par exemple : cerclage métallique ou jonc sur l'extrémité du câble repliée, jonc serti sur l'extrémité droite et non repliée du câble.

## Revendications

1. Crochet pour l'accrochage d'un lien, notamment d'un lien élastique, qui présente une partie formant un bloc (14) de fixation au lien (16), et une partie formant une boucle d'accrochage ouverte (22) dont une branche (24) est solidaire du bloc de fixation et dont l'autre branche (28) est libre, peut s'écarter ou se rapprocher latéralement du bloc et présente un moyen d'agrippage constitué par un bec (32) dirigé vers le fond de la boucle (22) et apte à pénétrer dans un évidement (42) relié au bloc (14) en fermant la boucle, caractérisé en ce que le bec (32) est pointu et en ce que l'évidement (42) se trouve directement sur le bloc (14) et présente en creux une forme correspondante pour l'autocentrage du bec dans l'évidement.

2. Crochet selon la revendication 1, caractérisé en ce que l'évidement (42) est délimité du côté de ladite autre branche (28) par une paroi frontale (36) qui présente un bord découpé en V pour l'introduction du bec (32) dans l'évidement.

3. Crochet selon l'une des revendications 1 et 2, caractérisé en ce que le bloc (14) est situé entre lesdites branches (24, 28).

4. Crochet selon l'une des revendications 1 à 3, caractérisé en ce que lesdites branches (24, 28) sont plates.

5. Crochet selon l'une des revendications 1 à 4, caractérisé en ce que lesdites branches (24, 28) portent à plat contre le bloc (14).

6. Crochet selon l'une des revendications 1 à 5, caractérisé en ce que le bloc (14) présente un passage de lien (18, 20).

7. Crochet selon les revendications 1 et 6, caractérisé en ce que ledit évidement (42) du bloc (14) est tourné en sens contraire du sens d'introduction du lien (16) dans ledit passage (18, 20).

8. Crochet selon la revendication 6 ou 7, caractérisé en ce que ledit passage de lien (18, 20) est situé dans l'axe de la boucle (22) et les branches (24, 28) de la boucle sont sensiblement symétriques par rapport à ce passage.

9. Crochet selon l'une des revendications 1 à 8, caractérisé en ce que l'une (24) desdites branches présente un anneau de préhension (44).

10. Crochet selon l'une des revendications 1 à 9, caractérisé en ce que le bloc (14) a la forme générale d'une sphère et en ce que la boucle (22) forme un U dont les branches (24, 28) aboutissent respectivement en deux zones diamétralement opposées de la sphère.

11. Crochet selon l'une des revendications 1 à 10, caractérisé en ce qu'il est venu de moulage en matière plastique.

## Claims

1. A fastener for fastening a strap, in particular an elastic strap, which has a portion forming a block (14) for fixing to the strap (16), and a portion forming an open fastening loop (22), a limb portion (24) of which is fixed with respect to the fixing block and the other limb portion (28) of which is free, can move laterally away from or towards the block, and has a catching means formed by a catch portion (32) which is directed towards the closed end of the loop (22) and which is capable of penetrating into a recess (42) connected to the block (14), thereby closing the loop, characterised in that the catch portion (32) is pointed and that the recess (42) is disposed directly on the block (14) and is of a corresponding hollow shape for self-centering of the catch portion in the recess.

2. A fastener according to claim 1, characterised in that the recess (42) is delimited on the side towards said other limb portion (28) by a front wall (36) which has an edge with a V-shaped cutout for introducing the catch portion (32) into the recess.

3. A fastener according to one of claims 1 and 2, characterised in that the block (14) is disposed between said limb portions (24, 28).

4. A fastener according to one of claims 1 to 3, characterised in that said limb portions (24, 28) are flat.

5. A fastener according to one of claims 1 to 4, characterised in that said limb portions (24, 28) bear flat against the block (14).

6. A fastener according to one of claims 1 to 5, characterised in that the block (14) has a passage (18, 20) for the strap.

7. A fastener according to claims 1 and 6, characterised in that said recess (42) in the block (14) is directed in the opposite direction to the direction in which the strap (16) is introduced into said passage (18, 20).

8. A fastener according to claim 6 or claim 7, characterised in that said passage (18, 20) is disposed on the axis of the loop (22) and the limb portions (24, 28) of the loop are substantially symmetrical with respect to said passage.

9. A fastener according to one of claims 1 to 8, characterised in that one (24) of said limb portions has a gripping ring (44).

10. A fastener according to one of claims 1 to 9, characterised in that the block (14) is in the general shape of a sphere and that the loop (22) forms a U-shape, the limb portions (24, 28) of which respectively terminate at two diametrically oppositely disposed zones of the sphere.

11. A fastener according to one of claims 1 to 10, characterised in that it is moulded in plastics material.

### Ansprüche

1. Bandhaken, insbesondere Haken für ein elastisches Band, bestehend aus einem an dem Band (16) befestigten Klotz (14) und aus einem offenen Haltebügel (22), dessen einer Schenkel (24) mit dem Feststellklotz (14) formschlüssig verbunden und dessen anderer Schenkel (28) frei ist und sich von dem Klotz abspreizen und ihm nähern kann und ein aus einem Schnabel (32) bestehendes Greifinstrument aufweist, das zur Krümmung des Bügels (22) hin gerichtet ist und beim Schließen des Bügels in eine Aussparung (42) eindrigen kann, die sich am Block (14) befindet, dadurch gekennzeichnet, daß der Schnabel (32) spitz zulaufend ist und daß sich die Aussparung (42) direkt an dem Klotz (14) befindet und nach innen so geformt ist, daß sich der Schnabel in der Aussparung selbst zentriert.

2. Haken nach Anspruch 1, dadurch gekennzeichnet, daß die Aussparung (42) auf der zum Schenkel (28) zugewandten Seite ein Stirnteil (36) aufweist, welches eine V-förmige Kante zur Einführung des Schnabels (32) in die Aussparung besitzt.

3. Haken nach den Ansprüchen 1 und 2, dadurch gekennzeichnet, daß der Klotz (14) zwischen diesen Schenkeln (24, 28) gelegen ist.

4. Haken nach einem der Ansprüche 1 bis 3, dadurch gekennzeichnet, daß diese Schenkel (24, 28) flach geformt sind.

5. Haken nach einem der Ansprüche 1 bis 4, dadurch gekennzeichnet, daß diese Schenkel (24, 28) flach an dem Klotz (24) anliegen.

6. Haken nach einem der Ansprüche 1 bis 5, dadurch gekennzeichnet, daß der Klotz (14) eine Durchgangsöffnung (18, 20) für das Band aufweist.

7. Haken nach einem der Ansprüche 1 bis 6, dadurch gekennzeichnet, daß diese Aussparung (42) des Klotzes (14) in eine Richtung gebogen ist, die der Einführungsrichtung des Bandes (16) in der Durchgangsöffnung (18, 20) entgegengesetzt ist.

8. Haken nach Anspruch 6 oder 7, dadurch gekennzeichnet, daß diese Banddurchgangsöffnung (18, 20) in der Längsachse des Bügels (22) ist und die Schenkel (24, 28) des Bügels symmetrisch zu dieser Durchgangsöffnung liegen.

9. Haken nach einem der Ansprüche 1 bis 8, dadurch gekennzeichnet, daß der eine (24) dieser Schenkel einen Greifring (44) aufweist.

10. Haken nach einem der Ansprüche 1 bis 9, dadurch gekennzeichnet, daß der Klotz (14) im wesentlichen die Gestalt einer Kugel und der Bügel (22) im wesentlichen die Gestalt eines U aufweisen, dessen Schenkel (24, 28) in Zonen enden, welche mit Bezug auf die Kugel diametral einander gegenüber liegen.

11. Haken nach einem der Ansprüche 1 bis 11, dadurch gekennzeichnet, daß er durch Spritzguß aus Kunststoff hergestellt ist.

0 043 883

FIG_1

FIG_2

FIG_3

0 043 883

FIG_4

FIG_5

FIG_6

2